# EUROPÄISCHE PATENTANMELDUNG

(11) **EP 3 133 114 A1**
(43) Veröffentlichungstag der Anmeldung: **22.02.2017**
(21) Anmeldenummer: 15181924.0
(22) Anmeldetag: 21.08.2015
(51) Int. Cl.: C08K 5/372, C08L 19/00

(54) **VERBESSERTES VERFAHREN VON GUMMIMODIFIZIERTEM BITUMEN AUS VULKANISIERTEM GUMMI**

(71) Anmelder: Rhein Chemie Rheinau GmbH, 68219 Mannheim (DE)
(72) Erfinder: Klein, Thomas, 69126 Heidelberg (DE); Ziser, Torsten, 69488 Birkenau (DE)
(74) Vertreter: Siegers, Britta

(57) **Zusammenfassung**

Gegenstand der vorliegenden Erfindung ist ein neuartiges Verfahren zur Herstellung von gummimodifiziertem Bitumen unter Einsatz von vulkanisiertem Gummi.

## Beschreibung

Gegenstand der vorliegenden Erfindung ist ein verbessertes Verfahren zur Herstellung von gummimodifiziertem Bitumen unter Einsatz von vulkanisiertem Gummi.

Gummimodifiziertes Bitumen, sog. veredeltes Bitumen, weist gegenüber unmodifiziertem Bitumen den Vorteil der mit der Temperatur weitgehend konstanten viskoelastischen Eigenschaften bei Variation der Temperatur auf: So ist es in großer Hitze nicht so weich und bei tiefen Temperaturen nicht so brüchig und verfügt auch über eine erhöhte Lebensdauer.

In diesem Sinne modifiziertes Bitumen kann dabei durch Zumischen eines unvernetzten Polymers oder eines vernetzten Gummis hergestellt werden. Die Zugabe von unvernetztem Polymer erfordert u. U. eine anschließende Vernetzung mit Schwefel oder Polysulfiden, siehe US-A 4 554 313. Dieser Weg ist schon alleine durch die eingesetzten Materialien sehr teuer.

Aufgrund der hohen Kosten für die Polymere hat man sich in der Vergangenheit der in großer Menge anfallenden Gummireifen als Quelle für einen Ersatzstoff bedient.

Allerdings ist schwefelvulkanisiertes (vernetztes) Gummi in Bitumen relativ unlöslich, so dass dessen Wiederverwertung in Spezialbitumen problematisch ist (Shell Bitumen Handbook, Shell UK, 2003 ISBN 0 7277 3220 X, Seite 79). Bitumen wird heiß gelagert bzw. transportiert, wobei die Homogenität gewahrt bleiben muss. Eingemischte, schlecht lösliche oder schlecht dispergierbare Polymere oder auch vulkanisiertes Gummi setzen sich in der heiß gelagerten Mischung ab. Die anwendungstechnischen Eigenschaften von modifiziertem Bitumen aus unterschiedlichen Lagerzonen unterscheiden sich, so dass sich Qualitätsprobleme beim Straßenbau ergeben. So beschreibt die DE-A 3885974 Probleme der Stabilität von Bitumen-Gummimehlmischungen ab einer Lagerdauer von 6 Stunden bei 200°C, die sich in einem Abfall der Viskosität bemerkbar machen. Als Lösung des Problems wird der Zusatz von Schwerölen mit naphthenoaromatischen Charakter sowie eines synthetischen Elastomers mit ungesättigten Olefinen mit Molekulargewichten über 100000 d vorgeschlagen. Die Mengen des zusätzlich notwendigen Polymers von 2-3 % lassen allerdings den ökonomischen Vorteil des Ersatzes eines Polymers durch Gummirezyklat verschwinden. US 3 338 849 beschreibt den Einsatz von Polyethylen in Verbindung mit Gilsonit, einem natürlichen Bitumenmineral, als Dispergiermittel für Gummirezyklat. Auch diese Lösung erweist sich als nicht rentabel.

Um die Löslichkeit bzw. Dispergierbarkeit von vernetztem Gummi bzw. Kautschuk zu verbessern wurden weitere Verfahren entwickelt unter Einsatz von hoher Temperatur, hohem Druck in Verbindung mit Dampf und/oder mechanischer Energie (z. B. im Doppelschneckenextruder; US-A 6,335,377) oder auch mittels Bestrahlung mit Mikrowellen, US-A 4104205). Diese Verfahren waren aber weder hinreichend effektiv noch wirtschaftlich; außerdem waren sie hinsichtlich des Schwefelbrückenabbaus nicht selektiv. So wurde auch die Polymerkette zerstört und damit die mit dem Einsatz von Polymeren verbundenen Vorteile reduziert.

In der EP 2164895 wird ein Verfahren zur Devulkanisierung von schwefelvernetzten Gummivulkanisaten zur Einarbeitung in Kautschukmassen unter Verwendung von Alkyl-polysulfiden beschrieben. Es zeichnet sich dadurch aus, dass a) das eingesetzte Polysulfid insbesondere in Konzentrationen von 5 - 20 %, bezogen auf das eingesetzte vulkanisierte Gummi, verwendet wird und b) die Devulkanisierung bei einer bevorzugten Temperatur von 60°C, oder 130°C oder, im Falle von Styrol-Butadien-oder Naturkautschuk, bei 80-150°C durchgeführt wird. Eine Weiterverwendung des so behandelten Gummis in Bitumenmischungen wird nicht angegeben.

Bei Gummi-Bitumenmischungen stellt sich nämlich wie erwähnt die Problematik der weitgehenden Unlöslichkeit von Gummi in Bitumen. Das Ziel einer Devulkanisierung speziell zur Anwendung von Altgummi in Bitumen sollte aber sein, gerade die Löslichkeit deutlich zu verbessern.

In der EP 2395046 wird ein Verfahren zur Herstellung von Gummi-modifiziertem Bitumen angegeben, dergestalt, dass man das Altgummi (Altreifenrecyclat) vorzugsweise mit 5 bis 20 Gew.% Alkylpolysulfid behandelt und anschließend das so behandelte Altgummi in Bitumen einmischt. Es wird ein erfindungsgemäßes Beispiel angegeben, indem Altgummigranulat mit 7% Alkylpolysulfid bei 150°C 4 Stunden lang getempert wurde. Die so hergestellte Mischung wurde mit dem Lagertest nach DIN EN 13399 als in Ordnung beurteilt, d.h. die Mischung ist lagerstabil. Nachteilig ist jedoch, dass hohe Mengen an Polysulfid notwendig sind, die das Verfahren verteuern und auch z.T. negative Auswirkungen auf die Konsistenz des Bitumens haben.

Aufgabe der vorliegenden Erfindung war daher die Bereitstellung eines kostengünstigen Verfahrens zur Herstellung von gummimodifiziertem Bitumen unter Einsatz von vulkanisiertem Gummi, welches die Nachteile des Standes der Technik nicht aufweist.

Überraschenderweise wurde gefunden, dass bereits bei Temperaturen von mindestens 140°C während des Temperns schon weniger als 5 Gew. % an Dialkylpolysulfid ausreichen, um die Löslichkeit von Gummi in heißem Bitumen so zu steigern, so dass sich das viskoelastische Verhalten dem von Bitumen ohne Gummizusatz annähert. Dabei reichen überaschenderweise sogar bereits Zeiten zum Devulkanisieren von vorzugsweise 20 min bis 60 min aus.

Gegenstand der vorliegenden Erfindung ist daher ein verbessertes Verfahren zur Herstellung von gummimodifiziertem Bitumen unter Einsatz von vulkanisiertem Gummi, wonach die Sulfidbrücken des vulkanisierten Gummis mit einem Dialkylpolysulfid der allgemeinen Formel (1) 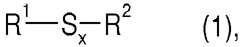
wobei R¹ und R² gleich oder verschieden sind und für einen linearen oder verzweigten C₁-C₁₈-Alkylrest stehen und x für die Zahlen 3 bis 12 steht,
bei Temperaturen von mindestens 140°C aufgebrochen (devulkanisiert) werden, wobei der Anteil des Dialkylpolysulfids bis zu 5 Gew.%, bezogen auf vulkanisiertes Gummi, beträgt, und das devulkanisierte Gummi anschließend dem Bitumen zugemischt wird.

Bei den in dem erfindungsgemäßen Verfahren eingesetzten Dialkylpolysulfiden handelt es sich um Verbindungen der allgemeinen Formel (1), 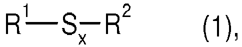 worin
R¹ und R² gleich oder verschieden sind und für einen linearen oder verzweigten C₁-C₁₈-Alkylrest stehen und x für die Zahlen 3 bis 8 steht.

Darüber hinaus ist es weiter bevorzugt, wenn als Dialkylpolysulfide solche eingesetzt werden, in denen R¹ und R² in der allgemeinen Formel für lineare oder verzweigte C₅-bis C₁₅-Alkylreste stehen.

Ebenfalls bevorzugt ist, wenn als Dialkylpolysulfide solche eingesetzt werden, in denen x in der allgemeinen Formel (1) für die Zahlen 3 bis 5 steht und R¹ bis R³ in der allgemeinen Formel für lineare oder verzweigte C₅- bis C₁₅- Alkylreste stehen.

Als Dialkylpolysulfid bevorzugt sind Dioctylpentasulfid und/oder Dioctyltetrasulfid, besonders bevorzugt verzweigte Dioctylpentasulfide oder Dioctyltetrasulfide.

Bei den vorgenannten Dialkylpolysulfiden handelt es sich um kommerziell verfügbare Produkte, die z.B. bei der Rhein Chemie Rheinau GmbH erhältlich sind.

Die Dialkylpolysulfide können sowohl einzeln als auch in beliebiger Abmischung untereinander in dem erfindungsgemäßen Verfahren eingesetzt werden.

Die Dialkylpolysulfide werden vorzugsweise in Mengen von 1 bis 5 Gew.%, besonders bevorzugt 1,5 bis 4 Gew.%, insbesondere von 1,5 bis 3 Gew.%, jeweils bezogen auf das zu devulkanisierende Gummivulkanisat, eingesetzt.

Bitumen im Sinne der Erfindung bezeichnet ein sowohl natürlich vorkommendes als auch durch Destillation aus Erdöl gewonnenes Gemisch aus verschiedenen organischen Stoffen. Aufgrund der biologischen Herkunft besteht Bitumen hauptsächlich aus Kohlenstoff und Wasserstoff. Es ist ein schwer flüchtiges, dunkelfarbiges Vielstoffgemisch organischer Substanzen, dessen elastoviskoses Verhalten sich mit der Temperatur ändert Als Bitumen im Sinne der Erfindung sind alle handelsüblichen Bitumenarten, wie z.B. 50/70 oder 70/100 einsetzbar. Dies umfasst vorzugsweise Straßenbaubitumen nach DIN EN 12591.

Die Temperaturen in dem erfindungsgemäßen Verfahren sind vorzugsweise 140-170°C, insbesondere 150°-160°C. Die Zeit für das Devulkanisieren beträgt vorzugsweise 20-60 min, besonders bevorzugt 30-50 min, ganz besonders bevorzugt 35-45 min.

In dem erfindungsgemäßen Verfahren erfolgt das Aufbrechen der Sulfidbrücken und/oder das Zumischen zum Bitumen vorzugsweise unter mechanischer Beanspruchung.

Mechanische Beanspruchung im Sinne der Erfindung bedeutet den Einsatz von Mischaggregaten, wie vorzugsweise Extruder, Innenmischer, Hochdruck-homogenisatoren, wie insbesondere Hochschermischgeräte, wie z. B. Ultra-Turrax^{®}, Kneter und/oder Walzwerk. Im großtechnischen Bereich ist die Verwendung von Extrudern und/oder Innenmischern dabei besonders bevorzugt, wobei die Art des Extruders und/oder Innenmischers keiner besonderen Beschränkung unterliegt. Im Labormaßstab ist das Hochschermischgerät, z. B. ein Ultra-Turrax^{®}, besonders bevorzugt.

Exemplarisch genannt sind nachfolgend Doppelschneckenextruder oder Planetwalzenextruder.

Bei der Durchführung im Extruder erfolgt dies vorzugsweise bei einer hohen Scherung.

Das vulkanisierte Gummi wird vorzugsweise in Form von rieselfähigen Teilchen kalt, d.h. bei Temperaturen von 0 bis 30 °C, eindosiert und danach gegebenenfalls erwärmt. Das Eindosieren der Teilchen der Gummivulkanisate erfolgt vorzugsweise am Beginn der Verfahrenslänge des Extruders und im Anschluss daran die Zudosierung des Dialkylpolysulfids.

In einer weiteren Ausführungsform des erfindungsgemäßen Verfahrens wird das Dialkylpolysulfid gemeinsam mit Öl, vorzugsweise mineralischem Öl, besonders bevorzugt naphthenischem Öl, eingesetzt.

Die Menge an Öl liegt zwischen 0 und 30 Gew. %, besonders bevorzugt bei 0 bis 20 Gew %, ganz besonders bevorzugt bei 0 bis 12 Gew. % und insbesondere bevorzugt bei 1-6 Gew %, jeweils bezogen auf die zu devulkanisierende Gummimischung.

Im Fall des Einsatzes eines Innenmischers zur mechanischen Beanspruchung sind Innenmischer mit ineinander greifenden oder mit tangierenden Rotoren bevorzugt. Dabei ist ein Innenmischer mit ineinander greifenden Rotoren besonders bevorzugt, da auf diese Weise mehr Scherenergie in die einzelnen Teilchen des Gummivulkanisats eingebracht werden kann.

Auch bei der Durchführung im Innenmischer kann in einer weiteren Ausführungsform des erfindungsgemäßen Verfahrens das Dialkylpolysulfid vor der Zugabe mit Öl, beispielsweise mineralischem Öl, wie z.B. naphthenischem Öl, versetzt werden.

Die Durchführung der Regeneration kann sowohl bei Normaldruck als auch bei erhöhtem Druck durchgeführt werden. Ein bevorzugter Regenerationsdruck liegt zwischen 1 und 20 bar, ein besonders bevorzugter Regenerationsdruck liegt zwischen 1 und 10 bar und ein ganz besonders bevorzugter Regenerationsdruck liegt zwischen 1 und 3 bar.

In einer weiteren Ausführungsform des erfindungsgemäßen Verfahrens werden weitere Additive, wie Metallverbindungen/-salze, insbesondere organische Zinkverbindungen/- salze u.a. als Sulfidfänger und damit Geruchsverminderer, wie sie die Rhein Chemie Rheinau GmbH unter den Namen Additin^{®} RC 4530 und Additin^{®} RC 4580 anbietet, zudosiert

Die Menge an zusätzlichen Additiven beträgt vorzugsweise 0,1 bis 1 Gew. %.

Bei dem vulkanisiertem Gummi handelt es sich um vernetzte Kautschuke auf Basis von Polydienen der R-Gruppe, umfassend Naturkautschuke (NR), Butadien-Kautschuke (BR), Styrol-Butadien-Kautschuke (SBR), Acrylnitril-Butadien-Kautschuke (NBR) und Butylkautschuke (IIR), um Vulkanisate aus Kautschuken mit wenigen Doppelbindungen oder doppelbindungsfreien Polymerhauptketten aus der M-Gruppe, umfassend Ethylen-Propylen-Dien-Kautschuk (EPDM), und Mischungen aus den vorgenannten Kautschuken der R- und M-Gruppe.

Die nach dem erfindungsgemäßen Verfahren hergestellten gummimodifizierten Bitumina finden Anwendung im Hochbau zur Abdichtung von Gebäudeteilen gegen Wasser (Bitumendachbahnen zur Dachabdichtung), Schutz von Stahl gegen Korrosion und im Straßenbau als Bindemittel für die Gesteinskörnungen im Asphalt (Straßenbelag).

Gegenstand der Erfindung ist zudem gummimodifiziertes Bitumen, erhältlich durch Einmischen von vulkanisiertem Gummi, dessen Sulfidbrücken mit mindestens einem Dialkylpolysulfid der allgemeinen Formel (1) 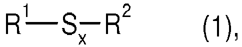 worin
R¹ und R² gleich oder verschieden sind und für einen linearen oder verzweigten C₁-C₁₈-Alkylrest stehen und x für die Zahlen 3 bis 12 steht,
bei Temperaturen von mindestens 140°C aufgebrochen (devulkanisiert) werden, wobei der Anteil des Dialkylpolysulfids bis zu 5 Gew. %, bezogen auf vulkanisiertes Gummi, beträgt und dieses anschließend dem Bitumen zugemischt wird.

Das Zumischen zum Bitumen erfolgt vorzugsweise unter mechanischer Beanspruchung.

Mechanische Beanspruchung im Sinne der Erfindung bedeutet den Einsatz von Mischaggregaten, wie vorzugsweise Extruder, Innenmischer, Hochdruckhomogenisatoren, wie insbesondere Hochschermischgeräte, wie z. B. Ultra-Turrax^{®}, Kneter und/oder Walzwerk. Im großtechnischen Bereich ist die Verwendung von Extrudern und/oder Innenmischern dabei besonders bevorzugt, wobei die Art des Extruders und/oder Innenmischers keiner besonderen Beschränkung unterliegt. Im Labormaßstab ist das Hochschermischgerät, z. B. ein Ultra-Turrax^{®}, besonders bevorzugt.

In Bezug auf die Definitionen, Indizes und bevorzugten Ausführungsformen wird auf die obigen Ausführungen verwiesen.

Der Rahmen der Erfindung erfasst alle oben stehenden und im Folgenden aufgeführten allgemeinen oder in Vorzugsbereichen genannten Restedefinitionen, Indizes, Parameter und Erläuterungen untereinander, also auch zwischen den jeweiligen Bereichen und Vorzugsbereichen in beliebiger Kombination.

Die vorliegende Erfindung wird anhand der nachfolgenden Beispiele näher erläutert, wobei die vorliegende Erfindung keinesfalls auf die Beispiele beschränkt ist.

### Versuchsbeispiele:

Als Mischungsbehälter wurden Aluminiumdosen mit einer Füllmenge von max. 900 ml verwendet. Zum Rühren der Gummimischung wurde ein modifizierter Ankerrührer mit zwei Flügeln verwendet. Auf die Dose wurde ein Deckel aufgesetzt. Entstehende Gase wurden über Waschaschen abgeführt. Eine Temperaturmessung erfolgte über ein Stabthermometer, das über eine weitere Öffnung in den Innenraum geführt wurde.

Im ersten Schritt wurde das Gummigranulat in den Alubehälter gegeben und mit dem Deckel verschlossen. Der Behälter wurde im Ölbad fixiert und das Rührwerk gestartet. Das Dioctylpentasulfid als Dialkylpolysulfid wurde mit dem Trägeröl gemischt und mit Hilfe einer Spritze über die kleine Öffnung im Deckel langsam zudosiert.

Nach dem Eindosieren wurde die Gummimischung bei der in der jeweiligen Versuchsnummer angegebenen Temperatur und Zeit und mit der Rührgeschwindigkeit von ca. 180 rpm gerührt.

Nach dem Tempern wurde Bitumen zugegeben, bis der Gummianteil 15 % der Gesamtmischung ausmachte. Die Gummi-Bitumenmischung wurde 2 h bei 180°C gerührt, um eine möglichst gute Verteilung des Gummis im Bitumen zu ermöglichen.

### Eingesetzt wurde:

Bitumen 50/70, der Firma Shell, Nynas T 22, ein naphthenisches Basisöl, verzweigtes Dioctylpentasulfid als Dialkylpolysulfid (Polysulfid) sowie zerschredderte Auto- und LKW-Reifen als Altgummi mit einer Partikelgröße von 0,2-0,8 mm.

In einer Versuchsreihe wurden folgende Versuche durchgeführt:

**Tabelle 1: Bedingungen der Vorbehandlung von vulkanisiertem Altgummigranulat**

| **Nr** | **Bitumentyp und ggf. Mischung zur Gummi-Devulkanisierung** | **Temperatur bei der Devulkanisierung [°]** | **Dauer der Devulkanisierens [min]** |
|---|---|---|---|
| | Referenzbitumen | | |
| 1 | Bitumen 50/70 + 10 % Altgummi (nicht vorbehandelt) | - | - |
| 2 | Bitumen 50/70 + Altgummi (15%), vorbehandelt mit 1,5 % Dialkylpolysulfid und 5,5% Nynas T 22 | 120 | 40 |
| 3 | Bitumen 50/70 + Altgummi (15%), vorbehandelt mit 1,5 % Dialkylpolysulfidund 5,5% Nynas T 22 | 140 | 40 |
| 4 | Bitumen 50/70 + Altgummi (15%), vorbehandelt mit 1,5 % Dialkylpolysulfidund 5,5% Nynas T 22 | 160 | 40 |
| 5 | Bitumen 50/70 + Altgummi (10%), vorbehandelt mit 7% Dialkylpolysulfid+ 10,5% Nynas T22 | 150 | 240 |
| 6 | Bitumen 50/70 + Altgummi (10%), vorbehandelt mit 3,5% Dialkylpolysulfid+ 3,5% Nynas T22 | 160 | 40 |

### Rheologische Messungen:

Die viskoelastischen Eigenschaften der mit in den Versuchen 1-6 erhaltenen modifizierten Gummis enthaltenden Gummi-Bitumenmischungen wurden über einen "Temperatursweep" der rheologischen Kennwerte komplexer Schermodul G* und Phasenwinkel δ mit dem "Dynamischen Scherrheometer" nach DIN EN 14770 bestimmt. Angaben zur Methode finden sich beispielsweise in den "Rahmenbedingungen für DSR-Messungen an Bitumen", Berichte der Bundesanstalt für Straßenwesen, Straßenbau Heft S 47 oder im Vortrag von Herrn Wörner "Bitumen: Bewertung anhand konventioneller und rheologischer Kennwerte, XVI. Weimarer Straßenbau- und Baustoffsymposium 27. März 2014 Weimar.

Dabei wurde die Bindemittelprobe zwischen zwei parallele Metallplatten eingebaut und einer schwingenden, in diesem Fall oszillierenden Scherbeanspruchung, ausgesetzt.

Der Durchmesser der beiden parallelen Platten betrug 25 mm. Es wurde ein Spaltabstand von 2 mm genutzt. Die Frequenz der sinuswellenförmigen Belastung beträgt 1,59 Hz (Kreisfrequenz ω = 10 s-1) und die maximale Deformation 10 % des Plattenabstands. Die Zeit der Temperierung zwischen den Prüfintervallen betrug 15 min.

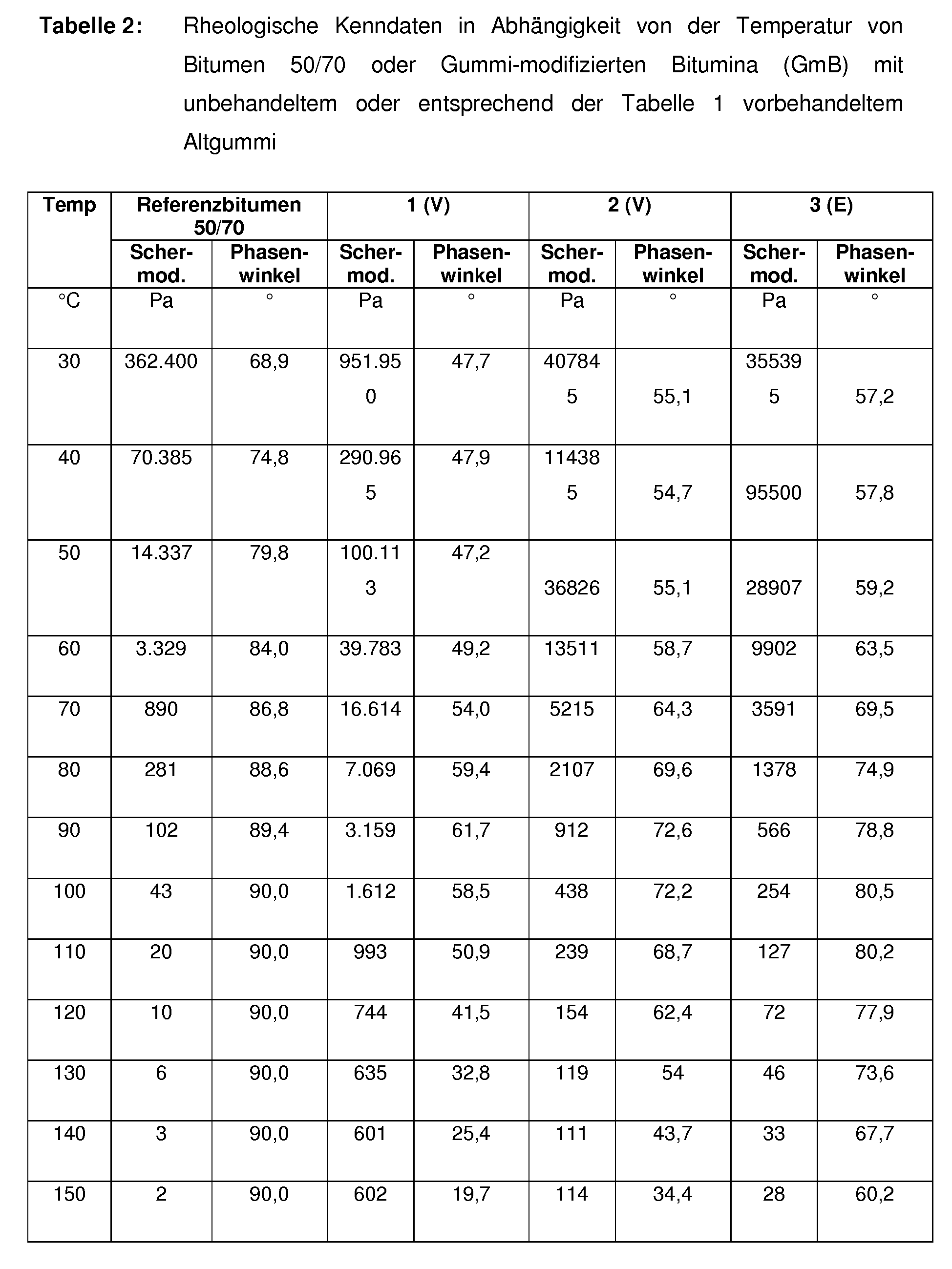

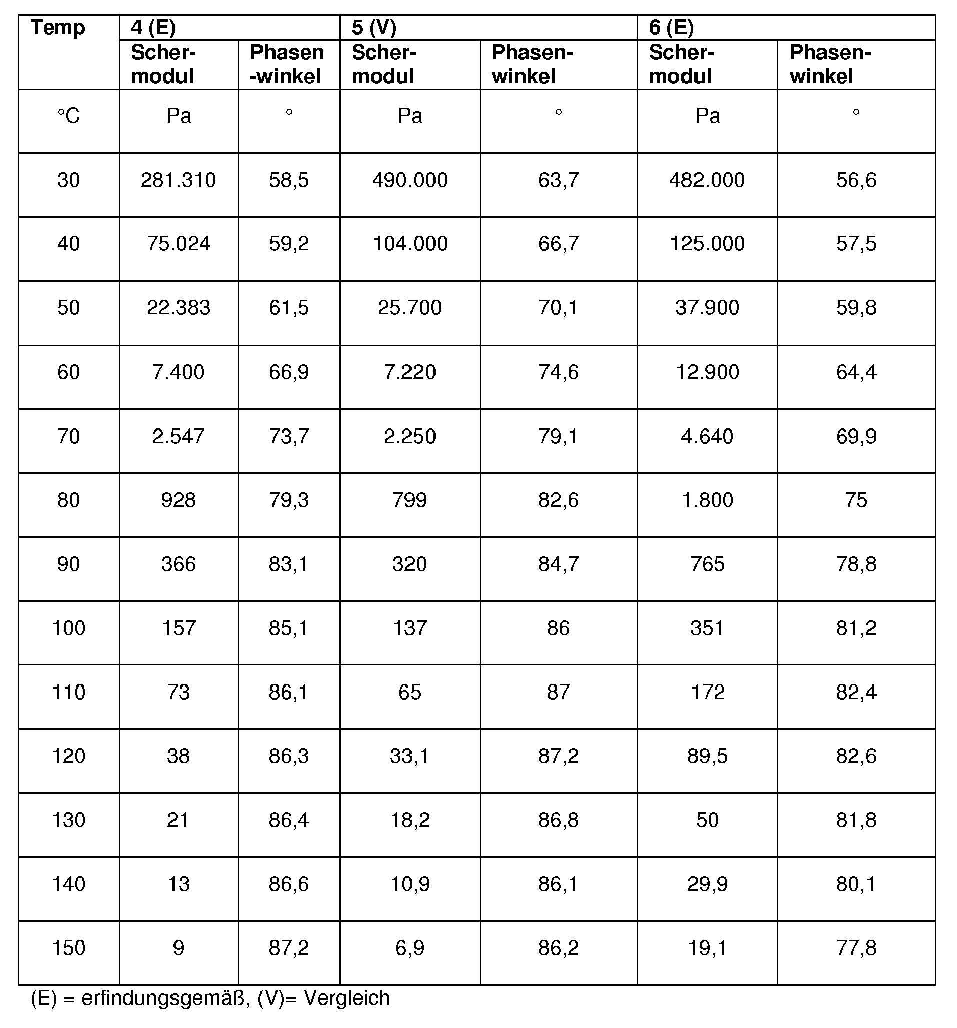

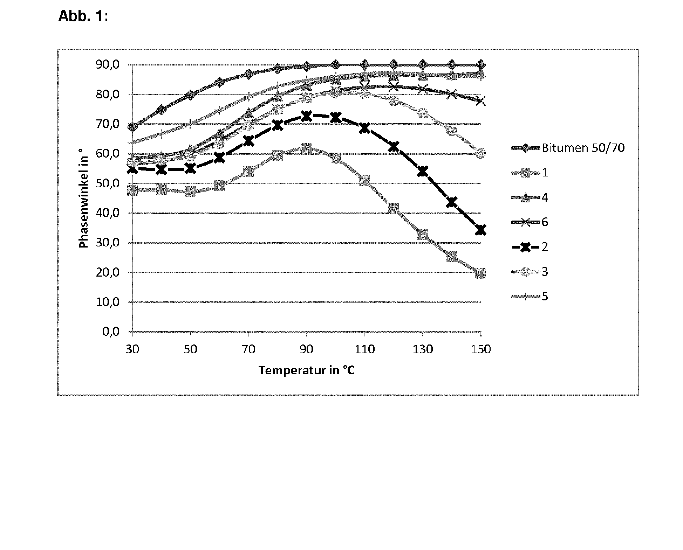

Wie die Abb. 1 zeigt, verändert sich das Gummimodifizierte Bitumen insbesondere im der Verarbeitungstemperatur (170°-180°C) nahekommenden Bereich von 140°-150°C hinsichtlich des Phasenwinkels hin zu dem von nichtmodifizierten Bitumen bekannten Verhalten. Dies entspricht einem homogeneren Bitumen und damit einem besseren Lösungsverhalten.

Eindrucksvoll zeigt sich dabei, dass bereits 1,5 Gew. % (Versuch 3 und insbesondere Versuch 4) bzw. 3,5 Gew. % (Versuch 6) an Dialkylpolysulfid reichen, sofern die Temperatur während des Devulkanisierens bei mindestens 140 °C liegt. Dies wird vor allem im Vergleich zu dem Vergleichsversuch 5 deutlich, wo 7% Dialkylpolysulfid eingesetzt wurden.

Der Vergleich von Versuch 2 (1,5%) Dialkylpolysulfid bei einer Vorbehandlungs-Temperatur von 120°C) und Versuch 4 (1,5% Dialkylpolysulfid bei einer Vorbehandlungs-Temperatur von 160°C) zeigt sehr deutlich die Bedeutung der Temperatur während des Devulkanisierens. Bei Versuch 4 (erfindungsgemäß) wird das Verhalten von unmodifizierten Bitumen im höheren Temperaturbereich beinahe erreicht), im Fall von Versuch 2 ist man noch sehr nahe dem Fall von GmB mit 15 % unbehandeltem Gummigranulat (Versuch 1).

Zudem konnte mit dem erfindungsgemäßen Verfahren nicht nur die Menge an Dialkylpolysulfid drastisch gesenkt werden, sofern die Temperatur bei mindestens 140°C liegt, es gelang auch, die Dauer für die Devulkanisation auf unter eine Stunde zu senken.

## Patentansprüche

1. Verfahren zur Herstellung von gummimodifiziertem Bitumen unter Einsatz von vulkanisiertem Gummi, **dadurch gekennzeichnet, dass** dessen Sulfidbrücken mit mindestens einem Dialkylpolysulfid der allgemeinen Formel (1) 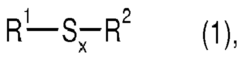
wobei R¹ und R² gleich oder verschieden sind und für einen linearen oder verzweigten C₁-C₁₈-Alkylrest stehen und x für die Zahlen 3 bis 12 steht,
bei Temperaturen von mindestens 140°C aufgebrochen (devulkanisiert) werden, wobei der Anteil des Dialkylpolysulfids bis zu 5 Gew.%, bezogen auf vulkanisiertes Gummi, beträgt, und das devulkanisierte Gummi anschließend dem Bitumen zugemischt wird.

2. Verfahren nach Anspruch 1, **dadurch gekennzeichnet, dass** das Dialkylpolysulfid zusammen mit Öl, vorzugsweise mineralischem Öl, eingesetzt wird.

3. Verfahren nach Anspruch 1 oder 2, **dadurch gekennzeichnet, dass** das Aufbrechen der Sulfidbrücken und/oder das Zumischen zum Bitumen unter mechanischer Beanspruchung erfolgt.

4. Verfahren nach einem der Ansprüche 1 bis 3, **dadurch gekennzeichnet, dass** man als Dialkylpolysulfid verzweigtes Dioctylpentasulfid oder Dioctyltetrasulfid einsetzt.

5. Verfahren nach einem der Ansprüche 1 bis 4, **dadurch gekennzeichnet, dass** die Zeit zum Devulkanisieren 20-60 min, bevorzugt 30-50 min, besonders bevorzugt 35-45 min beträgt.

6. Gummimodifiziertes Bitumen, erhältlich durch Einmischen von vulkanisiertem Gummi, dessen Sulfidbrücken mit mindestens einem Dialkylpolysulfid der allgemeinen Formel (1) 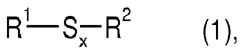 worin
R¹ und R² gleich oder verschieden sind und für einen linearen oder verzweigten C₁-C₁₈-Alkylrest stehen und x für die Zahlen 3 bis 12 steht,
bei Temperaturen von mindestens 140°C aufgebrochen (devulkanisiert) werden, wobei der Anteil des Dialkylpolysulfids bis zu 5 Gew.%, bezogen auf vulkanisiertes Gummi, beträgt, und dieses anschließend dem Bitumen zugemischt wird.
